(19) **Europäisches Patentamt**
**European Patent Office**
**Office européen des brevets**

(11) **EP 4 278 765 B1**

(12) # EUROPEAN PATENT SPECIFICATION

(45) Date of publication and mention of the grant of the patent:
**13.11.2024 Bulletin 2024/46**

(21) Application number: **22704434.4**

(22) Date of filing: **18.01.2022**

(51) International Patent Classification (IPC):
**H04W 72/02** *(2009.01)* **H04W 84/18** *(2009.01)*
**H04W 72/0446** *(2023.01)* **H04W 72/12** *(2023.01)*

(52) Cooperative Patent Classification (CPC):
**H04W 84/18; H04W 72/02;** H04W 72/0446;
H04W 72/12; Y02D 30/70

(86) International application number:
**PCT/IT2022/050003**

(87) International publication number:
**WO 2022/153343 (21.07.2022 Gazette 2022/29)**

(54) **METHOD OF TRANSMITTING REAL-TIME DATA PACKETS AND FURTHER NON-REAL-TIME DATA PACKAGES BETWEEN NODES OF A BLE NETWORK WITH MESH TOPOLOGY, VIA A CONNECTION-FREE COMMUNICATION**

VERFAHREN ZUR ÜBERTRAGUNG VON ECHTZEITDATENPAKETEN UND WEITEREN NICHTECHTZEITDATENPAKETEN ZWISCHEN KNOTEN EINES BLE-NETZWERKS MIT MESH-TOPOLOGIE ÜBER EINE VERBINDUNGSFREIE KOMMUNIKATION

PROCÉDÉ DE TRANSMISSION DE PAQUETS DE DONNÉES EN TEMPS RÉEL ET D'AUTRES PAQUETS DE DONNÉES NON EN TEMPS RÉEL ENTRE DES NOEUDS D'UN RÉSEAU DE BLE À TOPOLOGIE MAILLÉE, VIA UNE COMMUNICATION SANS CONNEXION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.01.2021 IT 202100000773**

(43) Date of publication of application:
**22.11.2023 Bulletin 2023/47**

(73) Proprietor: **Università degli Studi di Catania**
**95124 Catania (CT) (IT)**

(72) Inventors:
• **PATTI, Gaetano**
**95124 CATANIA (CT) (IT)**
• **LO BELLO, Lucia**
**95124 CATANIA (CT) (IT)**
• **FAULISI, Alessandro Carmelo**
**95124 CATANIA (CT) (IT)**
• **DI PIETRO, Alessandra**
**95124 CATANIA (CT) (IT)**
• **SUDANO, Francesco**
**95124 CATANIA (CT) (IT)**

• **ABBATE, Nunzio**
**95124 CATANIA (CT) (IT)**

(74) Representative: **Mola, Edoardo et al**
**Praxi Intellectual Property S.p.A.**
**Corso Vittorio Emanuele II, 3**
**10125 Torino (IT)**

(56) References cited:
EP-A1- 1 860 833  CN-A- 105 703 868
US-A1- 2018 020 447  US-A1- 2018 091 929

• **AGNOLETTO DANIEL ET AL: "Time Slot Transmission Scheme with Packet Prioritization for Bluetooth Low Energy Devices used in Real-Time Applications", INTERNATIONAL JOURNAL OF WIRELESS INFORMATION NETWORKS, PLENUM PRESS, NEW YORK, NY, US, vol. 27, no. 4, 26 September 2020 (2020-09-26), pages 518 - 534, XP037273608, ISSN: 1068-9605, [retrieved on 20200926], DOI: 10.1007/S10776-020-00494-4**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **LEONARDI LUCA ET AL: "Multi-Hop Real-Time Communications Over Bluetooth Low Energy Industrial Wireless Mesh Networks", IEEE ACCESS, vol. 6, 8 May 2018 (2018-05-08), pages 26505 - 26519, XP011684839, DOI: 10.1109/ACCESS.2018.2834479**

**Description**

The present invention relates to a method for transmitting real time data packets and further non real time data packets between the nodes of a BLE (Bluetooth Low Energy) mesh topology network, through a connectionless communication.

In particular, said method is designed to transmit from a node to one or more further nodes of said BLE mesh topology network (hereinafter called BLE mesh network) real time data packets and further non real time data packets, different from said real time data packets, without the transmission of said further non real time data packets interfering with the transmission of said real time data packets

The term "node" means any hardware device capable of communicating with further hardware devices belonging to the same network.

The term "hardware device" means any electronic device, such as a computer, printer, fax, modem, etc..

As said, the communication between the nodes of said BLE mesh network is a connectionless communication.

The expression *"connectionless communication"* means a data transmission mode in which each data packet carries information in the header and the destination address is sufficient to allow an independent sending of a data packet to its respective destination through the network itself [1].

Furthermore said method is designed to support the mobility of the nodes belonging to the BLE mesh network.

In fact, when the nodes move within the BLE mesh network, not only the transmission of data packets is guaranteed, but also the communication between said nodes is guaranteed.

In other words, if a second node is the recipient of a data packet sent by a first node and is no longer in a position such as to be within the transmission coverage area of said first node but rather is within the transmission coverage area of a third node (other than said first node and said second node), the communication between said first node and said second node is in any case guaranteed.

**Prior Art**

As it is known, Bluetooth Mesh Profile [2] is a communication protocol designed for a BLE network and allows data packets to be transmitted via connectionless communication in a BLE mesh network.

The medium access control substrate (MAC) is the layer that controls the hardware responsible for interacting with the wireless transmission medium.

This substrate, called *advertising bearer,* defines a protocol in which it is not possible to predict the timing of transmission of data packets.

Consequently, it is not possible to guarantee any predictability on the delivery time of said data packets.

In other words, it is not possible to determine a maximum delivery time for data packets.

Therefore, this protocol is not able to support the transmission of real time data packets.

In fact, as far as delivery time is concerned, real time data packets are subject to time constraints and for this reason they require predictability.

The delivery time of a real time data packet must therefore be calculable to verify that the delivery of said data packet takes place within a time limit specified for it.

In some cases it is possible to calculate this delivery time with accuracy, while in other cases it is possible to obtain an *upper bound* for said delivery time, i.e. an upper limit.

Either one or the other of the two conditions must be true for real time communication to be supported.

A further communication protocol [3] is known for the transmission of real time data packets on a BLE network by means of a connection-oriented communication.

The term *"connection-oriented communication"* means a data communication mode by which end devices use a communication protocol to establish an end-to-end logical or physical connection between communication agents prior to the transmission of any data type.

Consequently, connection-oriented communication is an alternative mode of communication to connectionless communication.

However, a first disadvantage is given by the fact that said further communication protocol does not allow the transmission of non real time data packets together with the transmission of real time data packets.

A second disadvantage is that the BLE network topology must be known in advance.

Consequently, the location of each node in the network must be known in advance.

A further disadvantage is that said further communication protocol is based on the connections between the nodes and therefore is not able to support the mobility of the nodes.

Agnoletto Daniel ET AL have published a "Time Slot Transmission Scheme with Packet Prioritization for Bluetooth Low Energy Devices used in Real-Time Applications" in INTERNATIONAL JOURNAL OF WIRELESS INFORMATION NETWORKS, PLENUM PRESS, NEW YORK, NY, US, vol. 27, nr. 4.

EP1860833 A1 discloses a method and a system for changing priority of slave frames in Bluetooth/WLAN coexistence.

US2018020447 A1 discloses a method for timeslot shifting for a lower-priority packet in a time slotted data network.

## Aim of the invention

Aim of the present invention is to overcome said disadvantages, providing a method for transmitting, through a connectionless communication, real time data packets and further non real time data packets (different from said real time data packets) between nodes of a BLE mesh topology network (i.e. a BLE mesh network), wherein said method is designed the transmission of said further data packets from interfering with the transmission of said data packets.

A further aim of the present invention is to provide a method capable of supporting also the mobility of the nodes within said BLE mesh network.

## Object of the invention

Therefore, object of the invention is a method for transmitting real time data packets and further non real time data packets between the nodes of a BLE mesh topology network, through connectionless communication, according to claim 1.

Further preferred embodiments are disclosed in the dependent claims.

## Attached figure list

The present invention will be now described, for illustrative, but not limitative purposes, according to its embodiment, making particular reference to the enclosed figures, wherein:

Figure 1 shows a BLE mesh network comprising a plurality of nodes able to communicate with each other;

Figure 2A shows a superframe for the BLE mesh network of Figure 1, in which said superframe is divided into a plurality of time slots, arranged in succession, in which some time slots are associated with a respective node of said BLE mesh network and some time slots are time slots shared by all the nodes of said BLE mesh network;

Figure 2B shows the superframe of Figure 1 which is repeated over time;

Figure 3 shows a table to indicate to which node of the BLE mesh network each time slot of the superframe has been associated or if the time slot of the superframe is a time slot shared by all the nodes of the BLE mesh network;

Figure 4 shows the block diagram of the method object of the invention;

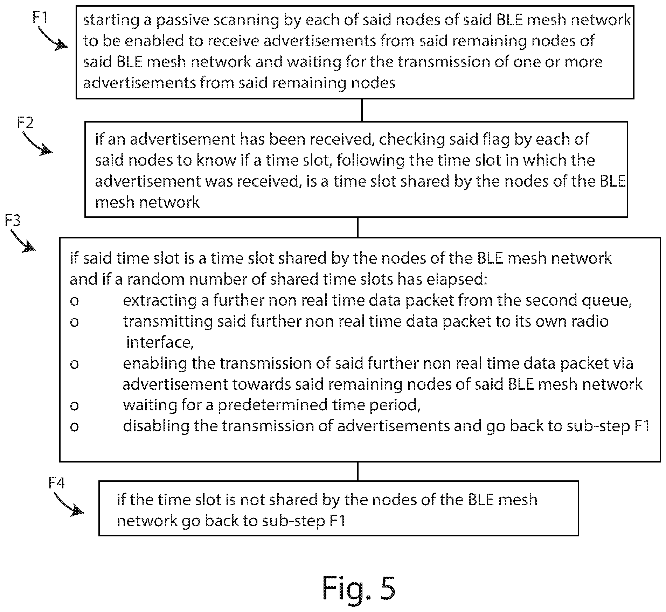

Figure 5 shows in detail step F of the method object of the invention;

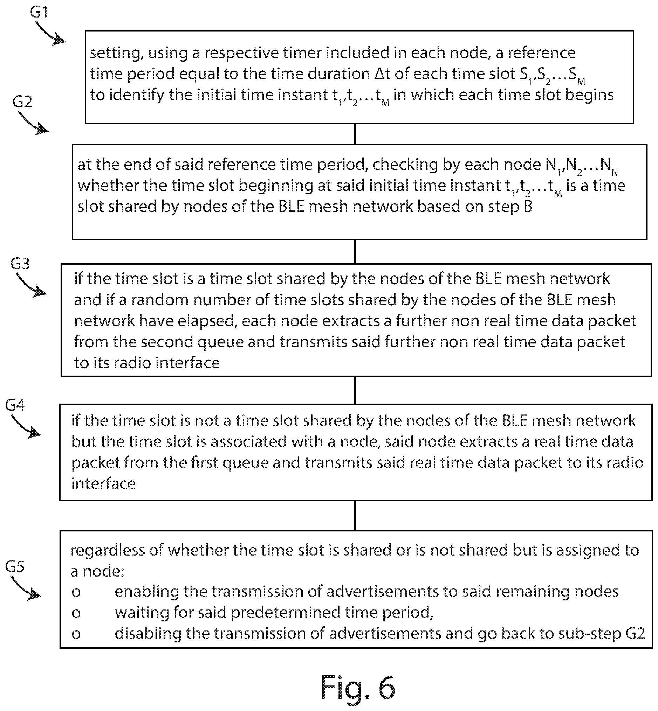

Figure 6 shows in detail step G of the method object of the invention.

## Detailed description of the invention

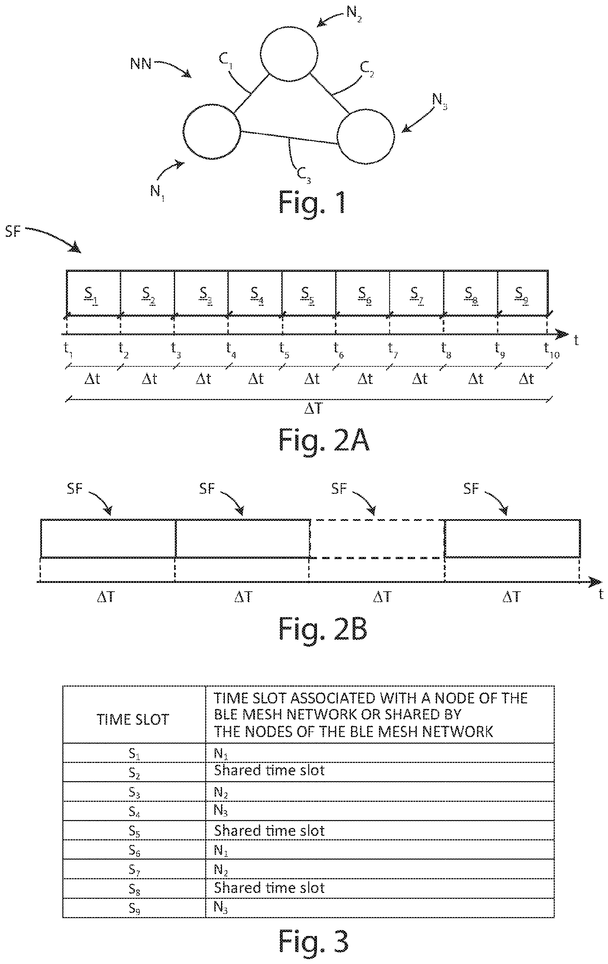

Figure 1 schematically shows a BLE mesh network indicated by the reference NN.

Said BLE mesh network NN comprises a plurality of nodes $N_1, N_2...N_N$, each of which is provided of a respective radio interface radio (not shown), i.e. a BLE radio interface, as well as a respective clock (not shown).

In particular, in the embodiment that is disclosed, said plurality of nodes comprises three nodes: a first node $N_1$, a second node $N_2$ and a third node $N_3$.

As shown in Figure 1, the first node $N_1$ and the second node $N_2$ communicate each other through a first communication channel $C_1$, the second node $N_2$ and the third node $N_3$ communicate each other through a second communication channel $C_2$ and the third node $N_3$ and the first node $N_1$ communicate each other through a third communication channel $C_3$.

Consequently, in the embodiment that is disclosed, the BLE mesh network NN is configured in such a way that the first node $N_1$ communicates with both the second node $N_2$ and the third node $N_3$, the second nod $N_2$ communicates both with the first node $N_1$ and the third node $N_3$, and the third node $N_3$ communicates with the first node $N_1$ and the second node $N_2$.

Although not shown in Figures, the BLE mesh network NN can comprise any number of nodes greater than or equal to two, without departing from the invention.

Figure 2A shows a superframe SF for said BLE mesh network NN, i.e. for all the nodes of said BLE mesh network NN.

A superframe SF is defined on the basis of the number of nodes of said BLE mesh network NN and the applications that each node can perform

Said superframe SF is divided in a plurality of time slots $S_1, S_2...S_M$, arranged in succession and having the same time duration $\Delta t$.

Since each time slot has a time duration $\Delta t$, the superframe SF has a time duration $\Delta T$ equal to the sum of the single time durations $\Delta t$ of all the time slots being part of the superframe SF.

This superframe SF is repeated cyclically over time as shown in figure 2B.

In particular, in the embodiment that is disclosed, as shown in Figure 3, the superframe SF comprises nine time slots $S_1, S_2...S_9$, arranged in succession:

- a first time slot $S_1$ associated with the first node $N_1$, wherein said first node $N_1$ is enabled to communicate with the other nodes of said BLE mesh network NN,
- a second time slot $S_2$ which is a time slot shared by all the nodes $N_1, N_2...N_N$ of said BLE mesh network NN (in the specific case $N_1, N_2, N_3$), wherein each node is enabled to communicate with others nodes of said BLE mesh network NN,
- a third time slot $S_3$ associated with the second node $N_2$, wherein said second node $N_2$ is enabled to communicate with the other nodes of the BLE mesh network NN,

- a fourth time slot $S_4$ associated with the third node $N_3$, wherein said third node $N_3$ is enabled to communicate with the other nodes of the BLE mesh network NN,
- a fifth time slot $S_5$ which is a time slot shared by all the nodes $N_1, N_2...N_N$ of said BLE mesh network NN (in the specific $N_1, N_2, N_3$), wherein each node is enabled to communicate with the other nodes of the BLE mesh network NN,
- a sixth time slot $S_6$ associated with the first node $N_1$, wherein said first node $N_1$ is enabled to communicate with the other nodes of the BLE mesh network NN,
- a seventh time slot $S_7$ associated with the second node $N_2$, wherein said second node $N_2$ is enabled to communicate with the other nodes of the BLE mesh network NN,
- an eighth time slot $S_8$ which is a time slot shared by all nodes $N_1, N_2...N_N$ of said BLE mesh network NN (in the specific case $N_1, N_2, N_3$), wherein each node is enabled to communicate with the other nodes of the BLE mesh network NN,
- a ninth time slot $S_9$ associated with the third node $N_3$, wherein said third node $N_3$ is enabled to communicate with the other nodes of the BLE mesh network NN.

In the embodiment that is described, with reference to all the time slots associated with the nodes, it should be considered that each of said time slots is uniquely associated with the respective node.

However, as mentioned, the superframe SF can be divided into a number of time slots greater than or equal to two based on the number of nodes in the BLE mesh network NN and the applications to be executed by said nodes, without leaving the scope of the 'invention.

Furthermore, although not shown in the figures, the superframe can comprise at least one time slot which is neither associated with a node nor shared by the nodes of the BLE mesh network NN.

In general, therefore, the number of time slots in the superframe SF is greater than or equal to the number of nodes in the BLE mesh network NN.

As can be seen from Figure 3, the superframe SF comprises at least a respective time slot associated with each node of the BLE mesh network NN and at least one time slot shared by all the nodes of the BLE mesh network NN.

In particular, in the embodiment being described, two time slots Are associated with the first node $N_1$ (i.e. the first time slot $S_1$ and the sixth time slot $S_6$), two time slots are associated with the second node $N_2$ (i.e. the third time slot $S_3$ and the seventh time slot $S_7$), two time slots are associated with the third node $N_3$ (i.e. the fourth time slot $S_4$ and the ninth time slot $S_9$), and three time slots are time slots shared by all the nodes $N_1, N_2, N_3$ of the BLE mesh network NN (i.e. the second time slot $S_2$, the fifth time slot $S_5$ and the eight time slot Ss).

In the embodiment that is described, in which a plurality of time slots are associated with the same node, at least one time slot is shared by all the nodes of the BLE NN mesh network and is arranged in succession to a time slot associated with said node.

In a variant (not shown), in the event that a single time slot is associated with a node, the superframe SF comprises a time slot shared by all the nodes of the BLE mesh network NN, arranged in succession to said time slot associated with said node.

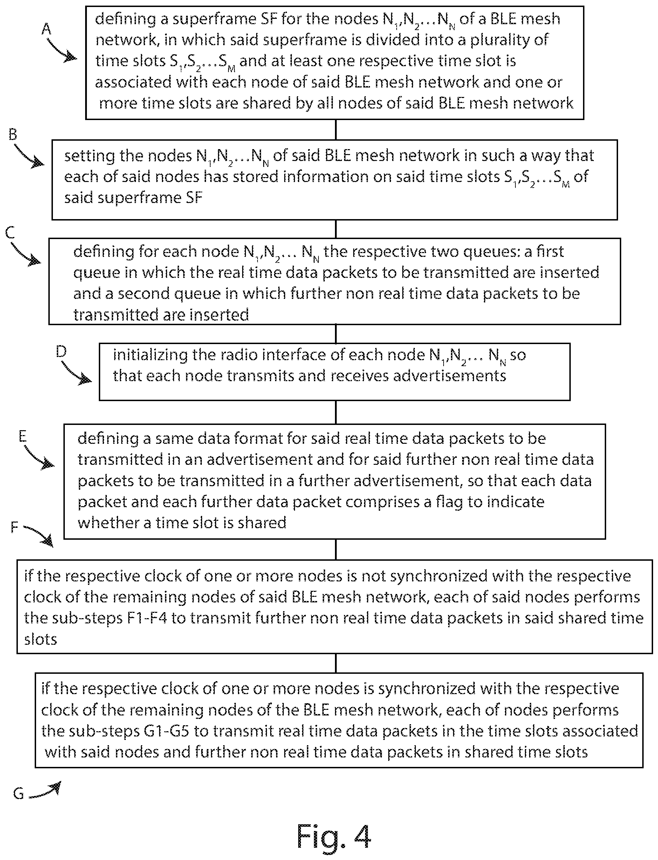

With particular reference to Figure 4, this Figure shows the block diagram of a method for transmitting real time data packets and further non real time data packets between the nodes $N_1, N_2...N_N$ of a BLE mesh network NN (in the specific case between the three nodes $N_1, N_2, N_3$), without the transmission of said further non real time data packets interfering with the transmission of said real time data packets.

Said method comprises the following steps:

A) defining a superframe SF for all nodes $N_1, N_2...N_N$ of said BLE mesh network NN, in which said superframe SF is divided into a plurality of time slots $S_1, S_2...S_M$, arranged in succession and having a same time duration $\Delta t$ and in which at least one respective time slot of said plurality of time slots $S_1, S_2...S_M$ is associated with each node $N_1, N_2...N_N$ of said BLE mesh network NN and one or more time slots of said plurality of time slots $S_1, S_2...S_M$ are shared by all nodes $N_1, N_2...N_N$ of the BLE mesh network NN, and repeating in succession said superframe SF over time;

B) setting the nodes $N_1, N_2...N_N$ of the BLE mesh network NN in such a way that each of said nodes $N_1, N_2...N_N$ has stored information on said time slots of said plurality of time slots $S_1, S_2...S_M$ of said superframe SF, in which this information comprises a first information referring to the order of succession of the time slots of said plurality of time slots $S_1, S_2...S_M$ and a second information indicating whether said time slot of said plurality of time slots $S_1, S_2...S_M$ is associated with a node or shared by the nodes of the BLE mesh network NN or is not associated with any node nor shared by said nodes of the BLE mesh network NN;

C) defining for each node $N_1, N_2...N_N$ the respective two queues:

a first queue which is a priority queue in which the real time data packets to be transmitted on the basis of a predetermined priority are inserted,
a second queue which is a FIFO queue in which further non real time data packets to be transmitted are inserted;

D) initializing the radio interface of each node $N_1$,

$N_2...N_N$ of the BLE mesh network NN so that each node $N_1,N_2...N_N$ transmits and receives *non-connectable undirected advertising* and *non-scannable undirected advertising,* so as to transmit advertisement (i.e. each node is adapted to transmit advertisement), and to perform a *passive scanning* with a predetermined duty cycle, so as to receive advertisement (i.e. each node is adapted to receive advertisement);

E) defining a data format for said real time data packets to be transmitted in an advertisement and a further data format for said further non real time data packets to be transmitted in a further advertisement to distinguish said further non real data packets from said real time data packets, wherein said data format is such that each real time data packet comprises a flag to indicate whether a time slot, arranged in succession to a time slot in which said real time data packet has been transmitted, is a time slot shared by the nodes of the BLE mesh network NN;

F) if the respective clock of one or more nodes is not synchronized with the respective clock of the remaining nodes of said BLE mesh network NN, each of said one or more nodes performs the following sub-steps to transmit further non real time data packets in said shared time slots:

> F1) starting *said passive scanning* to be enabled to receive advertisements from said remaining nodes of said BLE mesh network NN and waiting for the transmission of one or more advertisements from said remaining nodes,
> F2) if an advertisement has been received, checking said flag to know if a time slot, following the time slot in which the advertisement was received, is a time slot shared by the nodes of the BLE mesh network NN,
> F3) if said time slot is a time slot shared by the nodes of the BLE mesh network NN and if a random number of shared time slots has elapsed:
>
>> F31) extracting a further non real time data packet from the second queue,
>> F32) transmitting said further non real time data packet to its own radio interface,
>> F33) enabling the transmission of said further non real time data packet via advertisement towards said remaining nodes of said BLE mesh network NN,
>> F34) waiting for a predetermined time period,
>> F35) disabling the transmission of advertisements and go back to sub-step F1,
>
> F4) if the time slot is not shared by the nodes of the BLE mesh network NN go back to sub-step F1;

G) if the respective clock of one or more nodes is synchronized with the respective clock of the remaining nodes of the BLE mesh network NN, each of said one or more nodes performs the following sub-steps to transmit real time data packets in the time slots associated with said nodes and further non real time data packets in shared time slots:

> G1) setting, using a respective timer included in each node $N_1,N_2...N_N$, a reference time period equal to the time duration $\Delta t$ of each time slot $S_1,S_2...S_M$ to identify the initial time instant $t_1$, $t_2...t_M$ in which each time slot $S_1,S_2...S_M$ begins,
> G2) at the end of said reference time period, checking by each node $N_1,N_2...N_N$ whether the time slot beginning at said initial time instant $t_1$, $t_2...t_M$ is a time slot shared by the nodes of the BLE mesh network NN based on step B,
> G3) if the time slot is a time slot shared by the nodes of the BLE mesh network NN and if a random number of time slots shared by the nodes of the BLE mesh network NN have elapsed, each node extracts a further non real time data packet from the second queue and transmits said further non real time data packet to its radio interface,
> G4) if the time slot is not a time slot shared by the nodes of the BLE mesh network NN but the time slot is associated with a node of the BLE mesh network, said node extracts a real time data packet from the first queue and transmits said real time data packet to its radio interface,
> G5) regardless of whether the time slot is shared or is not shared but is assigned to a node,
>
>> G51) enabling the transmission of advertisement to said remaining nodes of said BLE mesh network NN,
>> G52) waiting for said predetermined time period,
>> G53) disabling the transmission of advertisements and go back to sub-step G2.

With reference to step A of the method, in a first alternative, compliant with the BLE specifications, the superframe SF can be defined to reduce the transmission latency of said further non real time data packets, to the detriment of the transmission latency of the real time data packets.

However, the transmission latency of said real time data packets remains limited.

In other words, it is possible to calculate a maximum value associated with the latency time through a mathematical method, for example using a mathematical method called *Response Time Analysis (RTA).*

In said first alternative, the superframe SF can be defined in such a way that a time slot associated with a node of the BLE mesh network NN is alternated with a time slot shared by the nodes of the BLE mesh network NN.

In a second alternative, the superframe SF can be defined to reduce the transmission latency of said real time data packets, to the detriment of the transmission latency of said further non real time data packets and of compliance with the BLE specifications.

The BLE specification require a time interval equal to 100 ms between two consecutive transmissions of advertisement. However, if it is necessary to support a traffic of real time data packets with a transmission latency lower than the transmission latency of real time data packets obtainable through the superframe SF defined in said first alternative, the time interval between two consecutive transmissions of advertisements can be less than 100 ms through the superframe SF defined in said second alternative, contravening the BLE specifications.

In said second alternative, the plurality of time slots of the superframe SF is divided into several groups of time slots called sub-superframes and each group of time slots comprises a first time slot and a second time slot, consecutive to the first time slot, both associated with one same node for the transmission of real time data packets.

In particular, each node is configured to set in some sub-superframes the second time slot associated with it as time slot shared by the nodes of the BLE mesh network.

In the embodiment that is described, each node is a programmable node and can be programmed to define a vector comprising a plurality of elements (in the specific case each element is a number but could be a character or a symbol without departing from the scope of the invention), in which the number of said elements is equal to the number of time slots present in the superframe SF.

In particular, each element represents a respective time slot of said superframe SF and a respective numerical value is associated with each element, in which said numerical value indicates whether the time slot is shared by the nodes of the BLE mesh network NN or if the time slot is associated with a respective node or if it is neither shared nor associated with a node.

Furthermore, with reference to step A, the superframe is repeated in succession over time, as shown in the example of Figure 3.

Consequently, the succession of the time slots $S_1, S_2...S_M$ is always the same as the same superframe SF repeats over time.

With reference to step B, each node $N_1, N_2...N_N$ of the BLE mesh network NN is configured to have information about the time slots $S_1, S_2...S_M$ of the superframe SF.

In particular, such information comprise a first information referring to the order of the succession of the time slots $S_1, S_2...S_M$ and a second information indicating whether said time slot $S_1, S_2...S_M$ is associated with a node or shared by the nodes of the BLE mesh network NN or is not associates with any node and neither shared by the nodes of the BLE mesh network NN.

With reference to step C, a respective first queue and a respective second queue are defined for each node $N_1, N_2...N_N$ of the BLE mesh network NN.

Each first queue contains the real time data packets to be transmitted on the basis of a predetermined priority (a respective number indicating the transmission priority is associated with each real time data packet), and each second queue is a FIFO queue containing further non real time data packets to be transmitted.

With reference to step D, the method provides a step of initializing the respective radio interface of each node $N_1, N_2...N_N$ (i.e. the BLE radio interface of each node) so that each node $N_1, N_2...N_N$ is adapted to transmit and receive advertisement.

The characteristics of an advertisement are defined by the specifications of the BLE technology.

With reference to the predetermined duty cycle with which a passive scanning is performed, said predetermined duty cycle depends on the nodes of the BLE mesh network (i.e. on the hardware devices identified through the respective nodes) and on the type of data to be transmitted.

With reference to step E, a data format is associated with said real time data packets to be transmitted in an advertisement and a further data format is associated with said further non real time data packets to be transmitted in a further advertisement, in which this further data format is such as to distinguish said further real time data packets from said non real time data packets

In the embodiment being disclosed, said data format is such that each real time data packet comprises a flag and each further data packets comprises a further flag.

With reference to a real time data packet, the flag indicates whether a time slot, arranged in succession to a time slot in which said data packet was transmitted, is a time slot shared by the nodes of the BLE mesh network NN.

For example, said flag can be a bit which assumes a first value equal to 0, when said time slot is not shared by the nodes of said BLE mesh network NN, and a second value equal to 1, when a time slot is shared by the nodes of the BLE mesh network NN.

With reference to a further non real time data packet, the further flag indicates that a time slot, arranged in succession to a time slot in which said further non real time data packet has been transmitted, is not a time slot shared by the nodes of the BLE mesh network NN.

For example, said further flag can be a bit that assumes a value equal to 0 because said time slot is not shared by the nodes of said BLE mesh network NN.

However, as regards the further data format associated with said further non real time data packet, the presence of a flag is not necessary but it is possible to provide that said further data format includes a predetermined field so that said further non real time data packet is distinct from said real time data packet, without departing from the scope of the invention.

With reference to step E, this step allows the transmission of further non real time data packets in the shared time slots, when one or more nodes are not synchronized with the remaining nodes of the BLE mesh network.

To this end, each of said nodes performs the sub-steps F1-F4.

With reference to step F3 it is not important when the shared time slot count is started because that count only serves to reduce the likelihood that more nodes transmit on the same shared time slot.

In the claimed invention, the count is started when a further non real time data packet is in the first position of the second queue, i.e. ready to be transmitted.

With reference to step G, i.e. when the clock of one or more nodes is synchronized with the clocks of the remaining nodes of the BLE mesh network, this step allows the transmission of real time data packets in the time slots associated with one or more nodes and the transmission of said further non real time data packets in the shared time slots, when the respective clock of said one or more nodes is synchronized with the respective clock of the remaining nodes of the mesh BLE NN.

To this end, each of said nodes perform the sub-steps G1-G5.

The same considerations mentioned for step F3 regarding counting the random number of shared time slots apply to step G3.

With reference to step G3 it is not important when the shared time slot count is started because that count only serves to reduce the likelihood that more nodes transmit on the same shared time slot.

In the claimed invention, the count is started when a further non real time data packet is in the first position of the second queue, i.e. ready to be transmitted.

Furthermore, when said one or more nodes are not synchronized with the clocks of the remaining nodes of the BLE mesh network NN, said method can comprise a step H directed to synchronize said one or more nodes with the clocks of said remaining nodes by means of an exchange of synchronization messages in said shared time slots to enable said nodes to transmit real time data packets in the time slots associated with said nodes.

In particular, said synchronization messages are sent and received in the shared time slots to enable said nodes to transmit real time data packets in the respective time slots associated with said nodes.

With particular reference to step H, i.e. the synchronization step of a node with respect to other nodes of the BLE mesh network NN, said step H can be performed in various way.

For example, the step H can comprise the following sub-steps:

H1) selecting a first node called Timing Master to transmit a time value referred to the clock of said Timing Master to all the nodes of the BLE mesh network NN;

H2) transmitting at a first instant of time $T_1$ a respective synchronization request message called *"Sync Req"* to all the nodes of the BLE mesh network NN by a second node of the BLE mesh network NN, other than said first node, wherein the clock of said second node is to be synchronized with the clock of said first node;

H3) if one or more nodes of the remaining nodes of the BLE mesh network NN (i.e. each node other than the first node and the second node) have its own clock synchronized with the clock of the first node, transmitting at a respective second time instant $T_2$, subsequent to said first time instant $T_1$, by each node of said remaining nodes a response message to said second node, wherein said response message is called *"Sync Resp"* and contains information on the respective hop distance from said first node;

H4) sending at a third time instant $T_3$, subsequent to said second time instant $T_2$, by each node of said remaining nodes a respective follow-up message called *"Sync Follow-up"* containing information on the respective time instant in which a respective response message has been sent;

H5) selecting by said second node a node among said remaining nodes, wherein said node is the closest node to said first node based on the hop distance, by receiving said synchronization request message *"Sync Req"* to a time instant $T_4$;

H6) calculating by said second node a transmission delay $D_T$ for the transmission of data between said second node and said node closest to the first node and a clock difference $D_C$ between the clock of said second node and the clock of said closest node to the first node using the following formulas:

$$D_T = \frac{[(T_4 - T_1) - (T_3 - T_2)]}{2}$$

$$D_C = (T_3 + D_T) - T_4$$

H7) adjusting the clock of said second node on the basis of said clock difference $D_C$, so as to synchronize the clock of said second node with the clock of said first node.

With reference to sub-step H1, the selection of the first node called Timing Master can be manual or automatic.

After selecting said first node, it will transmit the time value of its clock to the other nodes of the BLE mesh network NN.

With reference to sub-step H2, a second node, different from the first node called Timing Master, transmits a synchronization request message called *"Sync Req"* to the nodes of the BLE mesh network NN.

The transmission of said message by said second node is a broadcast transmission.

With reference to sub-step H3, in the event that one or more nodes of the remaining nodes of the BLE mesh network NN (i.e. the nodes different from the first node and the second node) have their own clock synchronized with the clock of the first node, each of said nodes transmits a respective message called *"Sync Resp"* which contains the information about the respective hop distance of each of said nodes with respect to the first node.

With reference to sub-step H4, each node of said remaining nodes sends a respective follow-up message called *"Sync Follow-up"* containing information on the respective time instant in which the respective reply message was transmitted.

With reference to sub-step H5, the node closest to the first node based of the hop distance is selected.

With reference to sub-step H6, this node (i.e. the node closest to the first node) will be used to calculate a transmission delay $D_T$ for the transmission of data from the second node to said node and a clock difference $D_C$ between the clock of said second node and the clock of said node.

With reference to the sub-step H7, the clock of said second node will be adjusted on the basis of the value of said clock difference $D_C$, so as to synchronize the clock of said second node with the clock of said first node.

The method can provide for the implementation of this synchronization step H over time to keep the clock of one or more respective nodes synchronized with the clocks of the remaining nodes of the BLE mesh network NN.

However, the step H, i.e. the synchronization step H, it is not necessary when the nodes are already synchronized.

For example, each node can be provided with a respective geolocation device, in particular a GPS device, and the respective clock is synchronized with the time signal of its own geolocation device.

## Advantages

Advantageously, as mentioned, the method object of the invention is conceived for a BLE mesh topology network and allows to transmit real time data packets and further non real time data packets, without the transmission of said further data packets interfering with the transmission of said data packets.

A further advantage is given by the fact that said method is able to support the mobility of the nodes.

## Bibliographical references:

[1] Bluetooth Specification Version 4.2 - Bluetooth SIG - 02/12/2014.

[2] Mesh Profile - Bluetooth Specification v. 1.0.1, Bluetooth SIG - 21/01/2019.

[3] L. Leonardi, G. Patti, L. Lo Bello, "Multi-Hop Real-Time Communications Over Bluetooth Low Energy Industrial Wireless Mesh Networks", IEEE Access, vol. 6, pp. 26505-26519, May 2018.

## Claims

1. Method for transmitting real time data packets and further non real time data packets between nodes $(N_1, N_2...N_N)$ of a BLE mesh network (NN), through a connectionless communication, in which each node $(N_1, N_2...N_N)$ comprises a respective radio interface and a respective clock, said method comprising the following steps:

   A) defining a superframe (SF) for all nodes $(N_1, N_2...N_N)$ of said BLE mesh network (NN), in which said superframe (SF) is divided into a plurality of time slots $(S_1, S_2...S_M)$, arranged in succession and having the same time duration $\Delta t$, in which at least one respective time slot of said plurality of time slots $(S_1, S_2...S_M)$ is associated with each node $(N_1, N_2...N_N)$ of said BLE mesh network (NN) and one or more time slots of said plurality of time slots $(S_1, S_2...S_M)$ are shared by all nodes $(N_1, N_2...N_N)$ of said BLE mesh network (NN), and in which said superframe (SF) has a time duration $\Delta T$ equal to the sum of the time durations $\Delta t$ of said time slots of said plurality of time slots $(S_1, S_2...S_M)$, and repeating in succession said superframe (SF) over time;

   B) setting the nodes $(N_1, N_2...N_N)$ of said BLE mesh network (NN) in such a way that each of said nodes $(N_1, N_2...N_N)$ has stored information on said time slots of said plurality of time slots $(S_1, S_2...S_M)$ of said superframe (SF), in which this information comprises a first information referring to the order of succession of the time slots of said plurality of time slots $(S_1, S_2...S_M)$ and a second information indicating whether said time slot of said plurality of time slots $(S_1, S_2...S_M)$ is associated with a node or shared by the nodes of said BLE mesh network (NN) or is not associated with any node nor shared by said nodes of said BLE mesh network (NN);

   C) defining for each node $(N_1, N_2...N_N)$ the respective two queues:

   a first queue which is a priority queue in which the real time data packets to be transmitted on the basis of a predetermined priority are inserted,
   a second queue which is a FIFO queue in which further non real time data packets to be transmitted are inserted;

D) initializing the radio interface of each node ($N_1,N_2...N_N$) of said BLE mesh network (NN) so that each node ($N_1,N_2...N_N$) transmits and receives *non-connectable undirected advertising* and *non-scannable undirected advertising,* so as to transmit advertisement, and to perform a *passive scanning* with a predetermined duty cycle, so as to receive advertisement;

E) defining a data format for said real time data packets to be transmitted in an advertisement and a further data format for said further non real time data packets to be transmitted in a further advertisement to distinguish said further non real data packets from said real time data packets, wherein said data format is such that each real time data packet comprises a flag to indicate whether a time slot, arranged in succession to a time slot in which said real time data packet has been transmitted, is a time slot shared by the nodes of the BLE mesh network (NN);

F) if the respective clock of one or more nodes is not synchronized with the respective clock of the remaining nodes of said BLE mesh network (NN), each of said one or more nodes performs the following sub-steps to transmit further non real time data packets in said shared time slots:

    F1) starting *said passive scanning* to be enabled to receive advertisements from said remaining nodes of said BLE mesh network (NN) and waiting for the transmission of one or more advertisements from said remaining nodes,

    F2) if an advertisement has been received, checking said flag to know if a time slot, following the time slot in which the advertisement was received, is a time slot shared by the nodes of the BLE mesh network (NN),

    F3) if said time slot is a time slot shared by the nodes of the BLE mesh network (NN) and if a random number of shared time slots has elapsed counting from the point in time where a further non real time data packet is ready to be transmitted:

        F31) extracting a further non real time data packet from the second queue,
        F32) transmitting said further non real time data packet to its own radio interface,
        F33) enabling the transmission of said further non real time data packet via advertisement towards said remaining nodes of said BLE mesh network (NN),
        F34) waiting for a predetermined time period,
        F35) disabling the transmission of advertisements and go back to sub-step F1,

    F4) if the time slot is not shared by the nodes of the BLE mesh network (NN) go back to sub-step F1;

G) if the respective clock of one or more nodes is synchronized with the respective clock of the remaining nodes of the BLE mesh network (NN), each of said one or more nodes performs the following sub-steps to transmit real time data packets in the time slots associated with said nodes and further non real time data packets in shared time slots:

    G1) setting, using a respective timer included in each node ($N_1,N_2...N_N$), a reference time period equal to the time duration $\Delta t$ of each time slot ($S_1,S_2...S_M$) to identify the initial time instant ($t_1,t_2...t_M$) in which each time slot ($S_1,S_2...S_M$) begins,
    G2) at the end of said reference time period, checking by each node ($N_1,N_2...N_N$) whether the time slot beginning at said initial time instant ($t_1,t_2...t_M$) is a time slot shared by nodes of the BLE mesh network (NN) based on step B,
    G3) if the time slot is a time slot shared by the nodes of the BLE mesh network (NN) and if a random number of time slots shared by the nodes of the BLE mesh networl (NN) have elapsed, counting from the point in time where a further non real time data packet is ready to be transmitted each node extracts a further non real time data packet from the second queue and transmits said further non real time data packet to its radio interface,
    G4) if the time slot is not a time slot shared by the nodes of the BLE mesh network (NN) but the time slot is associated with a node with a node of the BLE mesh network (NN), single of the BLE mesh network (NN) said node extracts a real time data packet from the first queue and transmits said real time data packet to its radio interface,
    G5) regardless of whether the time slot is shared or is not shared but is assigned to a node,

        G51) enabling the transmission of advertisement to said remaining nodes of said BLE mesh network (NN),
        G52) waiting for said predetermined time period G53) disabling the transmission of advertisement and go back to sub-step G2.

**2.** Method according to the previous claim, wherein if the respective clock of one or more nodes is not synchronized with the respective clock of the remaining nodes of the BLE mesh network (NN), said method comprises the following step:
H) synchronizing said one or more nodes with the clocks of said remaining nodes through an exchange of synchronization messages in said shared time slots to enable said nodes to transmit real time data packets in the time slots associated with said nodes.

**3.** Method according to the previous claim, wherein said step H comprises the following sub-steps:

H1) selecting a first node called Timing Master to transmit a time value referred to the clock of said Timing Master to all the nodes of the BLE mesh network (NN);
H2) transmitting at a first instant of time $T_1$ a respective synchronization request message called *"Sync Req"* to all the nodes of the BLE mesh network (NN) by a second node of the BLE mesh network (NN), other than said first node, wherein the clock of said second node is to be synchronized with the clock of said first node;
H3) if one or more nodes of the remaining nodes of the BLE mesh network (NN), other than the first node and the second node, have its own clock synchronized with the clock of the first node, transmitting at a respective second time instant $T_2$, subsequent to said first time instant $T_1$, by each node of said remaining nodes a response message to said second node, wherein said response message is called *"Sync Resp"* and contains information on the respective hop distance from said first node;
H4) sending at a third time instant $T_3$, subsequent to said second time instant $T_2$, by each node of said remaining nodes a respective follow-up message called "Sync Follow-up" containing information on the respective time instant in which a respective response message has been sent;
H5) selecting by said second node a node among said remaining nodes, wherein said node is the closest node to said first node based on the hop distance, by receiving said synchronization request message *"Sync Req"* to a time instant $T_4$;
H6) calculating by said second node a transmission delay $D_T$ for the transmission of data between said second node and said node closest to the first node and a clock difference $D_C$ between the clock of said second node and the clock of said closest node to the first node using the following formulas:

$$D_{\mathrm{T}} = \frac{[(T_4 - T_1) - (T_3 - T_2)]}{2}$$

$$D_{\mathrm{C}} = (T_3 + D_{\mathrm{T}}) - T_4$$

H7) adjusting the clock of said second node on the basis of said clock difference $D_C$, so as to synchronize the clock of said second node with the clock of said first node.

**4.** Method according to any one of the previous claims, wherein, with reference to step A, each time slot associated with a node is followed by a time slot shared by the nodes of the BLE mesh network (NN) and, if more time slots are associated with the same node, at least one of said time slots is followed by a time slot shared by the nodes of the BLE mesh network (NN).

**5.** Method according to any one of the claims 1-4, wherein, with reference to step A, said superframe (SF) is defined in such a way that a time slot associated with a node is alternated with a time slot shared by the nodes of the BLE mesh network (NN).

**6.** Method according to any one of the claims 1-4, wherein

said plurality of time slots is divided into groups of time slots called sub-superframes and each group of time slots comprises a first time slot and a second time slot, consecutive to the first time slot, both associated with the same node for the transmission of real time data packets, and wherein
each node is configured to set the second time slot associated with it as a time slot shared by the nodes of the BLE mesh network (NN).

**7.** Method according to any one of the previous claims, wherein said real time data packet comprises a header and said flag is arranged inside said header.

**8.** Method according to any one of the previous claims, wherein, with reference to the step E, said flag is a bit which assumes a first value equal to 0, when a time slot, arranged in succession to a time slot in which said real time data packet has been transmitted, is not shared by the nodes of said BLE mesh network (NN), and a second value equal to 1, when a time slot, arranged in succession to a time slot in which said real time data packet has been transmitted, is shared by the nodes of the BLE mesh network (NN).

9. Method according to any one of the previous claims, wherein with reference to the real time data packets inserted in said first queue, a respective number indicating the transmission priority is associated with each data packet.

10. Method according to any one of the previous claims, wherein, with reference to each sub-step F1, each node receives one advertisement at a time.


**Patentansprüche**

1. Verfahren zum Übertragen von Echtzeitdatenpaketen und weiteren Nicht-Echtzeitdatenpaketen zwischen den Knoten ($N_1$, $N_2$...$N_N$) eines BLE-Maschennetzwerks (NN) durch eine verbindungslose Kommunikation, bei der jeder Knoten ($N_1$, $N_2$...$N_N$) eine jeweilige Funkschnittstelle und eine jeweilige Uhr umfasst, wobei das Verfahren die folgenden Schritte umfasst:

   A) Definieren eines Superframes (SF) für alle Knoten ($N_1$, $N_2$...$N_N$) des BLE-Maschennetzwerks (NN), wobei der Superframe (SF) in eine Vielzahl von Zeitschlitzen ($S_1$, $S_2$...$S_M$) unterteilt ist, die nacheinander angeordnet sind und dieselbe Zeitdauer $\Delta t$ aufweisen, wobei mindestens ein jeweiliger Zeitschlitz der Vielzahl von Zeitschlitzen ($S_1$, $S_2$...$S_M$) jedem Knoten ($N_1$, $N_2$...$N_M$) des BLE-Maschennetzwerks (NN) zugeordnet ist und ein oder mehrere Zeitschlitze der Vielzahl von Zeitschlitzen ($S_1$, $S_2$...$S_M$) von allen Knoten ($N_1$, $N_2$...$N_M$) des BLE-Maschennetzwerks (NN) gemeinsam genutzt werden, und wobei der Superframe (SF) eine Zeitdauer $\Delta T$ aufweist, die gleich auf die Summe der Zeitdauern $\Delta t$ der Zeitschlitze der Vielzahl von Zeitschlitzen ($S_1$, $S_2$...$S_M$) ist, und aufeinanderfolgendes Wiederholen des Superframes (SF) im Laufe der Zeit;
   B) Einstellen der Knoten ($N_1$, $N_2$...$N_N$) des BLE-Maschennetzwerks (NN) in der Weise, dass jeder der Knoten ($N_1$, $N_2$...$N_N$) Informationen über die Zeitschlitze der Vielzahl von Zeitschlitzen ($S_1$, $S_2$...$S_M$) des Superframes (SF) gespeichert hat, wobei diese Informationen eine erste Information umfassen, die sich auf die Reihenfolge der Zeitschlitze der Vielzahl von Zeitschlitzen ($S_1$, $S_2$...$S_M$) bezieht, und eine zweite Information, die angibt, ob der Zeitschlitz der Vielzahl von Zeitschlitzen ($S_1$, $S_2$...$S_M$) einem Knoten zugeordnet ist oder von den Knoten des BLE-Maschennetzwerks (NN) gemeinsam genutzt wird oder keinem Knoten zugeordnet ist oder von den Knoten des BLE-Maschennetzwerks (NN) gemeinsam genutzt wird;
   C) Definieren der jeweiligen zwei Warteschlan-

gen für jeden Knoten ($N_1$, $N_2$...$N_M$) :

   eine erste Warteschlange, die eine Prioritätswarteschlange ist, in die die auf der Grundlage einer vorgegebenen Priorität zu übertragenden Echtzeitdatenpakete eingefügt werden,
   eine zweite Warteschlange, die eine FIFO-Warteschlange ist, in die weitere zu übertragende Nicht-Echtzeitdatenpakete eingefügt werden;

D) Initialisieren der Funkschnittstelle jedes Knotens ($N_1$, $N_2$...$N_N$) des BLE-Maschennetzwerks (NN), so dass jeder Knoten ($N_1$, $N_2$...$N_N$) *nicht verbindbare ungerichtete Werbung und nicht scannbare ungerichtete Werbung* überträgt und empfängt, um Werbung zu übertragen, und ein *passives Scannen* mit einem vorgegebenen Arbeitszyklus durchführt, um Werbung zu empfangen;
E) Definieren eines Datenformats für die in einer Anzeige zu übertragenden Echtzeitdatenpakete und eines weiteren Datenformats für die in einer weiteren Anzeige zu übertragenden weiteren Nicht-Echtzeitdatenpakete, um die weiteren Nicht-Echtzeitdatenpakete von den Echtzeitdatenpaketen zu unterscheiden, wobei das Datenformat so beschaffen ist, dass jedes Echtzeitdatenpaket ein Flag umfasst, um anzuzeigen, ob ein Zeitschlitz, der nach einem Zeitschlitz angeordnet ist, in dem das Echtzeitdatenpaket übertragen wurde, ein von den Knoten des BLE-Maschennetzwerks (NN) gemeinsam genutzter Zeitschlitz ist;
F) wenn die jeweilige Uhr eines oder mehrerer Knoten nicht mit der jeweiligen Uhr der übrigen Knoten des BLE-Maschennetzwerks (NN) synchronisiert ist, führt jeder der einen oder mehreren Knoten die folgenden Unterschritte aus, um weitere nicht in Echtzeit erfolgende Datenpakete in den gemeinsam genutzten Zeitschlitzen zu übertragen:

   F1) Starten des *passiven Scannens,* um Anzeigen von den übrigen Knoten des BLE-Maschennetzwerks (NN) empfangen zu können, und Warten auf die Übertragung einer oder mehrerer Anzeigen von den übrigen Knoten,
   F2) wenn eine Anzeige empfangen wurde, Überprüfen des Flags, um festzustellen, ob ein Zeitschlitz, der auf den Zeitschlitz folgt, in dem die Anzeige empfangen wurde, ein von den Knoten des BLE-Maschennetzwerks (NN) gemeinsam genutzter Zeitschlitz ist,
   F3) wenn der Zeitschlitiz ein von den Knoten des BLE-Maschennetzwerks (NN) gemeinsam genutzter Zeitschlitz ist und eine zufällige Anzahl gemeinsam genutzter Zeitschlitze verstrichen ist: dem Zeitpunkt gezählt, an dem ein weiteres Nicht-Echtzeitdatenpaket zur Übertragung bereit steht:

F31) Extrahieren eines weiteren nicht in Echtzeit erfolgenden Datenpakets aus der zweiten Warteschlange,
F32) Übertragen des weiteren nicht in Echtzeit erfolgenden Datenpakets an die eigene Funkschnittstelle,
F33) Aktivieren der Übertragung des weiteren nicht in Echtzeit gesendeten Datenpakets per Anzeige an die verbleibenden Knoten des BLE-Maschennetzwerks (NN), F34) Warten auf eine vorgegebene Zeitspanne,
F35) Deaktivieren der Übertragung von Anzeigen und Zurückkehren zu Unterschritt F1,

F4) wenn der Zeitschlitz nicht von den Knoten des BLE-Maschennetzwerks (NN) gemeinsam genutzt wird, Zurückkehren zu Unterschritt F1;

G) wenn die jeweilige Uhr eines oder mehrerer Knoten mit der jeweiligen Uhr der übrigen Knoten des BLE-Maschennetzwerks (NN) synchronisiert ist, führt jeder dieser einen oder mehreren Knoten die folgenden Unterschritte aus, um Echtzeitdatenpakete in den mit diesen Knoten verbundenen Zeitschlitzen und weitere Nicht-Echtzeitdatenpakete in gemeinsam genutzten Zeitschlitzen zu übertragen:

G1) Festlegen eines Referenzzeitraums, der der Zeitdauer $\Delta t$ jedes Zeitschlitzes ($S_1$, $S_2...S_M$) entspricht, unter Verwendung eines jeweiligen in jedem Knoten ($N_1,N_2...N_N$) enthaltenen Timers, um den Anfangszeitpunkt ($t_1,t_2...t_M$) zu identifizieren, in dem jeder Zeitschlitz ($S_1$, $S_2$, ... $S_M$) beginnt;
G2) am Ende des Referenzzeitraums durch jeden Knoten ($N_1$, $N_2... N_N$) prüfen, ob der Zeitschlitz, der zu dem Anfangszeitpunkt ($t_1$, $t_2... t_M$) beginnt, ein von Knoten des BLE-Maschennetzwerks (NN) gemeinsam genutzter Zeitschlitz ist, basierend auf Schritt B,
G3) wenn der Zeitschlitz ein von den Knoten des BLE-Maschennetzwerks (NN) gemeinsam genutzter Zeitschlitz ist und wenn eine zufällige Anzahl von von den Knoten des BLE-Maschennetzwerks (NN) gemeinsam genutzten Zeitschlitzen verstrichen ist, dem Zeitpunkt gezählt, an dem ein weiteres Nicht-Echtzeitdatenpaket zur Übertragung bereit steht: extrahiert jeder Knoten ein weiteres Nicht-Echtzeit-Datenpaket aus der zweiten Warteschlange und überträgt das weitere Nicht-Echtzeit-Datenpaket an seine Funkschnittstelle,
G4) wenn der Zeitschlitz kein von den Knoten des BLE-Maschennetzwerks (NN) gemeinsam genutzter Zeitschlitz ist, der Zeitschlitz aber einem Knoten des BLE-Maschennetzwerks (NN) zugeordnet ist, extrahiert der Knoten ein Echtzeit-Datenpaket aus der ersten Warteschlange und überträgt das Echtzeit-Datenpaket an seine Funkschnittstelle,
G5) unabhängig davon, ob der Zeitschlitz gemeinsam genutzt wird oder nicht, aber einem Knoten zugeordnet ist,

G51) Aktivieren der Übertragung von Werbung an die verbleibenden Knoten des BLE-Maschennetzwerks (NN),
G52) Warten auf den vorgegebenen Zeitschlitz
G53) Deaktivieren der Übertragung von Werbung und Zurückkehren zu Unterschritt G2.

2. Verfahren gemäß dem vorhergehenden Anspruch, wobei, wenn die jeweilige Uhr eines oder mehrerer Knoten nicht mit der jeweiligen Uhr der verbleibenden Knoten des BLE-Maschennetzwerks (NN) synchronisiert ist, umfasst das Verfahren den folgenden Schritt:
H) Synchronisieren des einen oder mehrerer Knoten mit den Uhren der verbleibenden Knoten durch einen Austausch von Synchronisierungsnachrichten in den gemeinsam genutzten Zeitschlitzen, um es den Knoten zu ermöglichen, Echtzeit-Datenpakete in den mit den Knoten verbundenen Zeitschlitzen zu übertragen.

3. Verfahren gemäß dem vorhergehenden Anspruch, wobei der Schritt H die folgenden Unterschritte umfasst:

H1) Auswählen eines ersten Knotens, Timing Master genannt, um einen Zeitwert, der auf die Uhr des Timing Masters bezogen ist, an alle Knoten des BLE-Maschennetzwerks (NN) zu übertragen;
H2) Senden einer entsprechenden Synchronisationsanforderungsnachricht *"Sync Req"* genannt zu einem ersten Zeitpunkt $t_1$ an alle Knoten des BLE-Maschennetzwerks (NN) durch einen zweiten Knoten des BLE-Maschennetzwerks (NN), der nicht der erste Knoten ist, wobei die Uhr des zweiten Knotens mit der Uhr des ersten Knotens synchronisiert werden soll;

H3) wenn ein oder mehrere Knoten der verbleibenden Knoten des BLE-Maschennetzwerks (NN), die nicht der erste Knoten und der zweite Knoten sind, ihre eigene Uhr haben, die mit der Uhr des ersten Knotens synchronisiert ist, Senden zu einem entsprechenden zweiten Zeitpunkt $T_2$, der auf den ersten Zeitpunkt $T_1$ folgt; durch jeden Knoten der verbleibenden Knoten eine Antwortnachricht an den zweiten Knoten, wobei die Antwortnachricht *"Sync Resp"* genannt wird und Informationen über die jeweilige Hop-Distanz vom ersten Knoten enthält;

H4) Senden einer jeweiligen Folgenachricht, "Sync Follow-up" genannt, durch jeden der verbleibenden Knoten zu einem dritten Zeitpunkt $T_3$, der auf den zweiten Zeitpunkt $T_2$ folgt, mit Informationen zum jeweiligen Zeitpunkt, zu dem eine jeweilige Antwortnachricht gesendet wurde;

H5) Auswählen eines Knotens durch den zweiten Knoten unter den verbleibenden Knoten, wobei dieser Knoten der Knoten ist, der dem ersten Knoten auf der Grundlage der Hop-Distanz am nächsten liegt, durch Empfangen der Synchronisierungsanforderungsnachricht *"Sync Req"* zu einem Zeitpunkt $T_4$;

H6) Berechnen einer Übertragungsverzögerung $D_T$ für die Datenübertragung zwischen dem zweiten Knoten und dem dem ersten Knoten am nächsten gelegenen Knoten und einer Uhrdifferenz $D_C$ zwischen der Uhr des zweiten Knotens und der Uhr des dem ersten Knoten am nächsten gelegenen Knotens durch den zweiten Knoten unter Verwendung der folgenden Formeln:

$$D_T = \frac{[(T_4 - T_1) - (T_3 - T_2)]}{2}$$

$$D_C = (T_3 + D_T) - T_4$$

H7) Anpassen der Uhr des zweiten Knotens auf der Grundlage der Taktdifferenz $D_C$, um die Uhr des zweiten Knotens mit der Uhr des ersten Knotens zu synchronisieren.

4. Verfahren nach einem der vorhergehenden Ansprüche, wobei in Bezug auf Schritt A auf jeden Zeitschlitz, der einem Knoten zugeordnet ist, ein von den Knoten des BLE-Maschennetzwerks (NN) gemeinsam genutzter Zeitschlitz folgt und, wenn mehrere Zeitschlitze demselben Knoten zugeordnet sind, auf mindestens einen dieser Zeitschlitze ein von den Knoten des BLE-Maschennetzwerks (NN) gemeinsam genutzter Zeitschlitz folgt.

5. Verfahren nach einem der Ansprüche 1-4, wobei in Bezug auf Schritt A der genannte Superframe (SF) so definiert ist, dass ein Zeitschlitz, der einem Knoten zugeordnet ist, mit einem von den Knoten des BLE-Maschennetzwerks (NN) gemeinsam genutzten Zeitschlitz abwechselt.

6. Verfahren nach einem der Ansprüche 1-4, wobei die Vielzahl von Zeitschlitzen in Gruppen von Zeitschlitzen, sogenannte Sub-Superframes, unterteilt ist und jede Gruppe von Zeitschlitzen einen ersten Zeitschlitz und einen zweiten Zeitschlitz umfasst, der auf den ersten Zeitschlitz folgt, die beide demselben Knoten für die Übertragung von Echtzeitdatenpaketen zugeordnet sind, und wobei jeder Knoten so konfiguriert ist, dass er den ihm zugeordneten zweiten Zeitschlitz als einen von den Knoten des BLE-Maschennetzwerks (NN) gemeinsam genutzten Zeitschlitz einstellt.

7. Verfahren nach einem der vorhergehenden Ansprüche, wobei das Echtzeitdatenpaket einen Header umfasst und das Flag innerhalb des Headers angeordnet ist.

8. Verfahren nach einem der vorhergehenden Ansprüche, wobei in Bezug auf Schritt E, das Flag ein Bit ist, das einen ersten Wert gleich 0 annimmt, wenn ein Zeitschlitz, der nach einem Zeitschlitz angeordnet ist, in dem das Echtzeitdatenpaket übertragen wurde, nicht von den Knoten des BLE-Maschennetzwerks (NN) gemeinsam genutzt wird, und einen zweiten Wert gleich 1 annimmt, wenn ein Zeitschlitz, der nach einem Zeitschlitz angeordnet ist, in dem das Echtzeitdatenpaket übertragen wurde, von den Knoten des BLE-Maschennetzwerks (NN) gemeinsam genutzt wird.

9. Verfahren nach einem der vorhergehenden Ansprüche, wobei in Bezug auf die in die erste Warteschlange eingefügten Echtzeitdatenpakete jedem Datenpaket eine entsprechende Nummer zugeordnet wird, die die Übertragungspriorität angibt.

10. Verfahren nach einem der vorhergehenden Ansprüche, wobei in Bezug auf jeden Unterschritt F1, empfängt jeder Knoten jeweils eine Anzeige.

**Revendications**

1. Procédé de transmission de paquets de données en temps réel et d'autres paquets de données non en temps réel entre les noeuds (N$_1$, N$_2$...N$_N$) d'un réseau maillé BLE (NN), par l'intermédiaire d'une communication sans connexion, dans lequel chaque noeud ($N_1$, $N_2$...$N_n$) comprend une interface radio respective et une horloge respective, ledit procédé comprenant les étapes suivantes:

A) définition d'une supertrame (SF) pour tous les noeuds ($N_1$, $N_2$...$N_N$) dudit réseau maillé BLE (NN), dans laquelle ladite supertrame (SF) est divisée en une pluralité d'intervalles de temps ($S_1$, $S_2$... $S_M$), disposés successivement et ayant la même durée temporelle $\Delta t$, dans laquelle au moins un intervalle de temps respectif de ladite pluralité d'intervalles de temps ($S_1$, $S_2$... $S_M$) est associé à chaque noeud ($N_1$, $N_2$...$N_N$) dudit réseau maillé BLE (NN) et un ou plusieurs intervalles de temps de ladite pluralité d'intervalles de temps ($S_1$, $S_2$... $S_M$) sont partagés par tous les noeuds ($N_1$, $N_2$...$N_N$) dudit réseau maillé BLE (NN), et dans laquelle ladite supertrame (SF) a une durée temporelle $\Delta T$ égale à la somme des durées temporelles $\Delta t$ desdits intervalles de temps de ladite pluralité d'intervalles de temps ($S_1$,$S_2$...$S_M$), et répétition successive de ladite supertrame (SF) au cours du temps;

B) paramétrer les noeuds ($N_1$,$N_2$...$N_N$) dudit réseau maillé BLE (NN) de telle manière que chacun desdits noeuds ($N_1$,$N_2$...$N_N$) ait stocké des informations sur lesdits intervalles de temps de ladite pluralité d'intervalles de temps ($S_1$, $S_2$...$S_M$) de ladite supertrame (SF), dans laquelle ces informations comprennent une première information se référant à l'ordre de succession des intervalles de temps de ladite pluralité d'intervalles de temps ($S_1$,$S_2$...$S_M$) et une deuxième information indiquant si ledit intervalle de temps de ladite pluralité d'intervalles de temps ($S_1$,$S_2$... $S_M$) est associé à un noeud ou partagé par les noeuds dudit réseau maillé BLE (NN) ou n'est associé à aucun noeud ni partagé par lesdits noeuds dudit réseau maillé BLE (NN);

C) définir pour chaque noeud ($N_1$, $N_2$...$N_N$) les deux files d'attente respectives: une première file d'attente qui est une file d'attente prioritaire dans laquelle sont insérés les paquets de données en temps réel à transmettre sur la base d'une priorité prédéterminée, une deuxième file d'attente qui est une file d'attente FIFO dans laquelle sont insérés d'autres paquets de données non en temps réel à transmettre;

D) initialiser l'interface radio de chaque noeud ($N_1$, $N_2$...$N_N$) dudit réseau maillé BLE (NN) de sorte que chaque noeud ($N_1$, $N_2$...$N_N$) transmette et reçoive *des publicités non dirigées non connectables et des publicités non dirigées non analysables,* de manière à transmettre des publicités, et à effectuer un balayage passif avec un cycle de service prédéterminé, de manière à recevoir des publicités;

E) définir un format de données pour lesdits paquets de données en temps réel à transmettre dans une publicité et un autre format de données pour lesdits autres paquets de données non en temps réel à transmettre dans une autre publicité pour distinguer lesdits autres paquets de données non réels desdits paquets de données en temps réel, ledit format de données étant tel que chaque paquet de données en temps réel comprend un indicateur pour indiquer si un intervalle de temps, agencé en succession à un intervalle de temps dans lequel ledit paquet de données en temps réel a été transmis, est un intervalle de temps partagé par les noeuds du réseau maillé BLE (NN);

F) si l'horloge respective d'un ou plusieurs noeuds n'est pas synchronisée avec l'horloge respective des noeuds restants dudit réseau maillé BLE (NN), chacun desdits un ou plusieurs noeuds exécute les sous-étapes suivantes pour transmettre d'autres paquets de données en temps non réel dans lesdits intervalles de temps partagés:

F1) démarrage de *ladite analyse passive* pour être autorisé à recevoir des publicités desdits noeuds restants dudit réseau maillé BLE (NN) et attente de la transmission d'une ou plusieurs publicités desdits noeuds restants,

F2) si une publicité a été reçue, vérification dudit indicateur pour savoir si un intervalle de temps, suivant l'intervalle de temps dans lequel la publicité a été reçue, est un intervalle de temps partagé par les noeuds du réseau maillé BLE (NN),

F3) si ledit intervalle de temps est un intervalle de temps partagé par les noeuds du réseau maillé BLE (NN) et si un nombre aléatoire d'intervalles de temps partagés s'est écoulé, compter à partir du moment où un autre paquet de données en temps non réel est prêt à être transmis:

F31) extraction d'un autre paquet de données en temps non réel de la deuxième file d'attente,
F32) transmission dudit autre paquet de données en temps non réel à sa propre interface radio,
F33) permettre la transmission dudit autre paquet de données non en temps réel par publicité vers lesdits noeuds restants dudit réseau maillé BLE (NN),
F34) attendre une période de temps prédéterminée,
F35) désactiver la transmission des publicités et revenir à la sous-étape F1,

F4) si l'intervalle de temps n'est pas partagé par les noeuds du réseau maillé BLE (NN), revenir à la sous-étape F1;

G) si l'horloge respective d'un ou plusieurs noeuds est synchronisée avec l'horloge respective des noeuds restants du réseau maillé BLE (NN), chacun desdits un ou plusieurs noeuds exécute les sous-étapes suivantes pour transmettre des paquets de données en temps réel dans les intervalles de temps associés auxdits noeuds et d'autres paquets de données en temps non réel dans des intervalles de temps partagés:

G1) définir, à l'aide d'un temporisateur respectif inclus dans chaque noeud ($N_1$, $N_2$... $N_N$), une période de temps de référence égale à la durée $\Delta t$ de chaque intervalle de temps ($S_1$, $S_2$... $S_M$) pour identifier l'instant de temps initial ($t_1$, $t_2$... $t_M$) dans lequel chaque intervalle de temps ($S_1$, $S_2$... $S_M$) commence,

G2) à la fin de ladite période de temps de référence, vérifier par chaque noeud ($N_1$, $N_2$... $N_N$) si l'intervalle de temps commençant audit instant de temps initial ($t_1$, $t_2$... $t_M$) est un intervalle de temps partagé par des noeuds du réseau maillé BLE (NN) sur la base de l'étape B,

G3) si l'intervalle de temps est un intervalle de temps partagé par les noeuds du réseau maillé BLE (NN) et si un nombre aléatoire d'intervalles de temps partagés par les noeuds du réseau maillé BLE (NN) s'est écoulé, compter à partir du moment où un autre paquet de données en temps non réel est prêt à être transmis: chaque noeud extrait un autre paquet de données non en temps réel de la deuxième file d'attente et transmet ledit autre paquet de données non en temps réel à son interface radio,

G4) si l'intervalle de temps n'est pas un intervalle de temps partagé par les noeuds du réseau maillé BLE (NN) mais l'intervalle de temps est associé à un noeud du réseau maillé BLE (NN), un single noeud du réseau maillé BLE (NN) extrait un paquet de données en temps réel de la première file d'attente et transmet ledit paquet de données en temps réel à son interface radio,

G5) indépendamment du fait que l'intervalle de temps soit partagé ou non mais qu'il soit attribué à un noeud,

G51) permettre la transmission de la publicité auxdits noeuds restants dudit réseau maillé BLE (NN),

G52) attendre ladite période de temps prédéterminé,

G53) G53) désactiver la transmission de la publicité et revenir à la sous-étape G2.

**2.** Procédé selon la revendication précédente, dans lequel si l'horloge respective d'un ou plusieurs noeuds n'est pas synchronisée avec l'horloge respective des noeuds restants du réseau maillé BLE (NN), ledit procédé comprend l'étape suivante:
H) synchroniser lesdits un ou plusieurs noeuds avec les horloges desdits noeuds restants par un échange de messages de synchronisation dans lesdits intervalles de temps partagés pour permettre auxdits noeuds de transmettre des paquets de données en temps réel dans les intervalles de temps associés auxdits noeuds.

**3.** Procédé selon la revendication précédente, dans lequel ladite étape H comprend les sous-étapes suivantes:

H1) sélectionner un premier noeud appelé Timing Master pour transmettre une valeur temporelle référencée par l'horloge dudit Timing Master à tous les noeuds du réseau maillé BLE (NN);
H2) transmettre à un premier instant $T_1$ un message de demande de synchronisation respectif appelé « *Sync Req* » à tous les noeuds du réseau maillé BLE (NN) par un deuxième noeud du réseau maillé BLE (NN), autre que ledit premier noeud, dans lequel l'horloge dudit deuxième noeud doit être synchronisée avec l'horloge dudit premier noeud;
H3) si un ou plusieurs noeuds des noeuds restants du réseau maillé BLE (NN), autres que le premier noeud et le deuxième noeud, ont leur propre horloge synchronisée avec l'horloge du premier noeud, transmettre à un deuxième instant temporel respectif $T_2$, postérieur audit premier instant temporel $T_1$; par chaque noeud desdits noeuds restants un message de réponse audit deuxième noeud, dans lequel ledit message de réponse est appelé « *Sync Resp* » et contient des informations sur la distance de saut respective à partir dudit premier noeud;
H4) envoyer à un troisième instant temporel $T_3$, postérieur audit deuxième instant temporel $T_2$, par chaque noeud desdits noeuds restants un message de suivi respectif appelé « Sync Follow-up » contenant des informations sur l'instant temporel respectif dans lequel un message de réponse respectif a été envoyé ;
H5) sélectionner par ledit deuxième noeud un noeud parmi lesdits noeuds restants, ledit noeud étant le noeud le plus proche dudit premier noeud sur la base de la distance de saut, en recevant ledit message de demande de synchronisation « *Sync Req* » à un instant $T_4$ ;

H6) calculer par ledit deuxième noeud un délai de transmission $\varDelta_T$ pour la transmission de données entre ledit deuxième noeud et ledit noeud le plus proche du premier noeud et une différence d'horloge $D_C$ entre l'horloge dudit deuxième noeud et l'horloge dudit noeud le plus proche du premier noeud en utilisant les formules suivantes :

$$D_T = \frac{[(T_4 - T_1) - (T_3 - T_2)]}{2}$$

$$D_C = (T_3 + D_T) - T_4$$

H7) ajuster l'horloge dudit deuxième nœud sur la base de ladite différence d'horloge *De,* de manière à synchroniser l'horloge dudit deuxième nœud avec l'horloge dudit premier nœud.

4. Procédé selon l'une quelconque des revendications précédentes, dans lequel, en référence à l'étape A, chaque intervalle de temps associé à un nœud est suivi d'un intervalle de temps partagé par les nœuds du réseau maillé BLE (NN) et, si plusieurs intervalles de temps sont associés au même noeud, au moins un desdits intervalles de temps est suivi d'un intervalle de temps partagé par les noeuds du réseau maillé BLE (NN).

5. Procédé selon l'une quelconque des revendications 1 à 4, dans lequel, en référence à l'étape A, ladite supertrame (SF) est définie de telle sorte qu'un intervalle de temps associé à un noeud soit alterné avec un intervalle de temps partagé par les noeuds du réseau maillé BLE (NN).

6. Procédé selon l'une quelconque des revendications 1 à 4, dans lequel ladite pluralité des intervalles de temps est divisée en groupes d'intervalles de temps appelés sous-supertrames et chaque groupe d'intervalles de temps comprend un premier intervalle de temps et un deuxième intervalle de temps, consécutif au premier intervalle de temps, toutes deux associées au même noeud pour la transmission de paquets de données en temps réel, et dans lequel chaque noeud est configuré pour définir le deuxième intervalle de temps qui lui est associée comme un intervalle de temps partagée par les noeuds du réseau maillé BLE (NN).

7. Procédé selon l'une quelconque des revendications précédentes, dans lequel ledit paquet de données en temps réel comprend un élément de tête et ledit indicateur est disposé à l'intérieur dudit élément de tête.

8. Procédé selon l'une quelconque des revendications précédentes, dans lequel, en référence à l'étape E, ledit indicateur est un bit qui prend une première valeur égale à 0, lorsqu'un intervalle de temps, agencé à la suite d'un intervalle de temps dans lequel ledit paquet de données en temps réel a été transmis, n'est pas partagé par les noeuds dudit réseau maillé BLE (NN), et une deuxième valeur égale à 1, lorsqu'un intervalle de temps, agencé à la suite d'un intervalle de temps dans lequel ledit paquet de données en temps réel a été transmis, est partagé par les noeuds du réseau maillé BLE (NN).

9. Procédé selon l'une quelconque des revendications précédentes, dans lequel en référence aux paquets de données en temps réel insérés dans ladite première file d'attente, un numéro respectif indiquant la priorité de transmission est associé à chaque paquet de données.

10. Procédé selon l'une quelconque des revendications précédentes, dans lequel, en référence à chaque sous-étape F1, chaque noeud reçoit une publicité à la fois.

Fig. 1

Fig. 2A

Fig. 2B

| TIME SLOT | TIME SLOT ASSOCIATED WITH A NODE OF THE BLE MESH NETWORK OR SHARED BY THE NODES OF THE BLE MESH NETWORK |
|---|---|
| $S_1$ | $N_1$ |
| $S_2$ | Shared time slot |
| $S_3$ | $N_2$ |
| $S_4$ | $N_3$ |
| $S_5$ | Shared time slot |
| $S_6$ | $N_1$ |
| $S_7$ | $N_2$ |
| $S_8$ | Shared time slot |
| $S_9$ | $N_3$ |

Fig. 3

A → defining a superframe SF for the nodes $N_1,N_2...N_N$ of a BLE mesh network, in which said superframe is divided into a plurality of time slots $S_1,S_2...S_M$ and at least one respective time slot is associated with each node of said BLE mesh network and one or more time slots are shared by all nodes of said BLE mesh network

B → setting the nodes $N_1,N_2...N_N$ of said BLE mesh network in such a way that each of said nodes has stored information on said time slots $S_1,S_2...S_M$ of said superframe SF

C → defining for each node $N_1,N_2...N_N$ the respective two queues: a first queue in which the real time data packets to be transmitted are inserted and a second queue in which further non real time data packets to be transmitted are inserted

D → initializing the radio interface of each node $N_1,N_2...N_N$ so that each node transmits and receives advertisements

E → defining a same data format for said real time data packets to be transmitted in an advertisement and for said further non real time data packets to be transmitted in a further advertisement, so that each data packet and each further data packet comprises a flag to indicate whether a time slot is shared

F → if the respective clock of one or more nodes is not synchronized with the respective clock of the remaining nodes of said BLE mesh network, each of said nodes performs the sub-steps F1-F4 to transmit further non real time data packets in said shared time slots

if the respective clock of one or more nodes is synchronized with the respective clock of the remaining nodes of the BLE mesh network, each of nodes performs the sub-steps G1-G5 to transmit real time data packets in the time slots associated with said nodes and further non real time data packets in shared time slots

G →

Fig. 4

F1 starting a passive scanning by each of said nodes of said BLE mesh network to be enabled to receive advertisements from said remaining nodes of said BLE mesh network and waiting for the transmission of one or more advertisements from said remaining nodes

F2 if an advertisement has been received, checking said flag by each of said nodes to know if a time slot, following the time slot in which the advertisement was received, is a time slot shared by the nodes of the BLE mesh network

F3 if said time slot is a time slot shared by the nodes of the BLE mesh network and if a random number of shared time slots has elapsed:
o        extracting a further non real time data packet from the second queue,
o        transmitting said further non real time data packet to its own radio interface,
o        enabling the transmission of said further non real time data packet via advertisement towards said remaining nodes of said BLE mesh network
o        waiting for a predetermined time period,
o        disabling the transmission of advertisements and go back to sub-step F1

F4 if the time slot is not shared by the nodes of the BLE mesh network go back to sub-step F1

Fig. 5

G1

setting, using a respective timer included in each node, a reference time period equal to the time duration $\Delta t$ of each time slot $S_1, S_2 \ldots S_M$ to identify the initial time instant $t_1, t_2 \ldots t_M$ in which each time slot begins

G2

at the end of said reference time period, checking by each node $N_1, N_2 \ldots N_N$ whether the time slot beginning at said initial time instant $t_1, t_2 \ldots t_M$ is a time slot shared by nodes of the BLE mesh network based on step B

G3

if the time slot is a time slot shared by the nodes of the BLE mesh network and if a random number of time slots shared by the nodes of the BLE mesh network have elapsed, each node extracts a further non real time data packet from the second queue and transmits said further non real time data packet to its radio interface

G4

if the time slot is not a time slot shared by the nodes of the BLE mesh network but the time slot is associated with a node, said node extracts a real time data packet from the first queue and transmits said real time data packet to its radio interface

G5

regardless of whether the time slot is shared or is not shared but is assigned to a node:
o    enabling the transmission of advertisements to said remaining nodes
o    waiting for said predetermined time period,
o    disabling the transmission of advertisements and go back to sub-step G2

# Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1860833 A1

- US 2018020447 A1

**Non-patent literature cited in the description**

- Time Slot Transmission Scheme with Packet Prioritization for Bluetooth Low Energy Devices used in Real-Time Applications. **DANIEL et al.** INTERNATIONAL JOURNAL OF WIRELESS INFORMATION NETWORKS. PLENUM PRESS, vol. 27

- **L. LEONARDI ; G. PATTI ; L. LO BELLO.** Multi-Hop Real-Time Communications Over Bluetooth Low Energy Industrial Wireless Mesh Networks. *IEEE Access,* May 2018, vol. 6, 26505-26519